# EUROPÄISCHE PATENTSCHRIFT

(11) **EP 2 925 561 B1**
(45) Veröffentlichungstag und Bekanntmachung des Hinweises auf die Patenterteilung: **13.03.2019**
(21) Anmeldenummer: 13795528.2
(22) Anmeldetag: 27.11.2013
(51) Int. Cl.: B60R 22/18, B60R 22/26, B60N 2/06, B60N 2/22, B60N 2/30, B60N 2/68

(54) **FAHRZEUGSITZ**
VEHICLE SEAT
SIÈGE DE VÉHICULE

(30) Priorität: 30.11.2012 DE 102012023781; 27.02.2013 DE 102013003788
(43) Veröffentlichungstag der Anmeldung: 07.10.2015
(73) Patentinhaber: Adient Luxembourg Holding S.à r.l., 1855 Luxembourg (LU)
(72) Erfinder: DILL, Thomas, 67699 Heiligenmoschel (DE); PLUTA, Wolfgang, 67699 Heiligenmoschel (DE); HAMMANN, Heinrich, 67806 Teschenmoschel (DE); ENNS, Viktor, 67663 Kaiserslautern (DE)
(74) Vertreter: Liedhegener, Ralf
(86) Internationale Anmeldenummer: PCT/EP2013/074846
(87) Internationale Veröffentlichungsnummer: WO 2014/083049

(56) Entgegenhaltungen:
- WO-A1-01/89875
- WO-A1-2008/093197
- DE-A1-102009 023 451
- DE-A1-102010 039 361

## Beschreibung

Die Erfindung betrifft einen Fahrzeugsitz mit den Merkmalen des Oberbegriffs des Anspruchs 1.

### Stand der Technik

Aus der DE 10 2007 011 874 A1 ist ein gattungsgemäßer Fahrzeugsitz bekannt. Der als Rücksitz ausgeführte Fahrzeugsitz umfasst zwei Sitzsegmente, wobei eines der Sitzsegmente einen Sitzplatz und das andere Sitzsegment zwei Sitzplätze umfasst. Die beiden Sitzsegmente sind nebeneinander angeordnet und unabhängig voneinander mittels Längseinsteller in Fahrtrichtung verschiebbar.

An dem einen Sitzplatz umfassenden Sitzsegment ist eine schwenkbare Rückenlehne angebracht. An dem zwei Sitzplätze umfassenden Sitzsegment sind zwei nebeneinander angeordnete Rückenlehnen angebracht, welche um dieselbe Schwenkachse relativ zu dem Sitzsegment schwenkbar sind.

Aus der EP 2 103 480 A2 ist ein Fahrzeugsitz mit drei Sitzplätzen bekannt. Der Fahrzeugsitz umfasst zwei Sitzsegmente, wobei eines der Sitzsegmente einen Sitzplatz mit einer schwenkbaren Rückenlehne umfasst. Das andere Sitzsegment umfasst zwei Sitzplätze, wobei diese beiden Sitzplätze eine gemeinsame schwenkbare Rückenlehne aufweisen.

Aus der DE 10 2010 039 361 A1 ist ein Fahrzeugsitz bekannt, mit einem Sitzteil, einem Rückenlehnenteil mit einem Lehnenabschnitt und einem Lukenabschnitt, die um eine Schwenkachse schwenkbar mit dem Sitzteil verbunden sind, und einem ersten Beschlag, der zur schwenkbaren Verbindung des Sitzteils mit dem Lehnenabschnitt an einer ersten Position am Sitzteil angeordnet ist, und einem zweiten Beschlag, der zur schwenkbaren Verbindung des Sitzteils mit dem Lukenabschnitt an einer zweiten Position am Sitzteil angeordnet ist, und mit einem dritten Beschlag, der zwischen dem ersten Beschlag und dem zweiten Beschlag angeordnet und zu dem ersten Beschlag und zu dem zweiten Beschlag entlang der Schwenkachse beabstandet ist.

Die DE 10 2009 023 451 A1 offenbart einen Fahrzeugsitz mit einem Sitzbankunterbau und einem Rückenlehnenoberbau, der mehrere Rückenlehnenbereiche aufweist, die jeweils an dem Sitzbankunterbau schwenkbar angeordnet sind, wobei einer der Rückenlehnenbereiche so angeordnet ist, dass er beim Schwenken aus einer Designposition hin zu einer Cargoposition zumindest einen anderen der Rückenlehnenbereiche in die Cargoposition mitnimmt.

Die WO 2008/093197 A1 offenbart einen Fahrzeugsitz mit einem Außensitz und einem Mittelsitz. Der Mittelsitz ist lösbar von dem Außensitz und in einer Transportbox verstaubar. An einer Lehne des Außensitzes ist eine Verriegelungsvorrichtung vorgesehen, die einen an einer Lehne des Mittelsitzes befestigten Bolzen verriegeln kann, so dass die beiden Lehnen fest miteinander verbindbar sind.

Die DE 10 2007 044 129 A1 offenbart einen Fahrzeugsitz mit einer um eine Schwenkachse (A) schwenkbaren ersten Rückenlehne und einer um die Schwenkachse (A) schwenkbaren zweiten Rückenlehne, wobei der Fahrzeugsitz Kopplungsmittel zur Kopplung der ersten Rückenlehne mit der zweiten Rückenlehne aufweist. Bei miteinander gekoppelten Rückenlehnen ist die zweite Rückenlehne zusammen mit der ersten Rückenlehne schwenkbar. Bei entkoppelten Rückenlehnen ist die zweite Rückenlehne unabhängig von der ersten Rückenlehne schwenkbar. Die die Kopplungsmittel umfassen einen an der ersten Rückenlehne angeordneten Bolzen und eine an der zweiten Rückenlehne angeordnete Verriegelungsvorrichtung, welche mit dem Bolzen zusammenwirkt. Ein dem zweiten Sitzplatz zugeordneter Gurtaustrittspunkt für ein Gurtband ist in Vertikalrichtung annähernd in direkter Linie über einem Längsholm und einem Drehlager der ersten Rückenlehne des ersten Sitzplatzes angeordnet.

### Aufgabe

Der Erfindung liegt die Aufgabe zu Grunde, einen Fahrzeugsitz der eingangs genannten Art zu verbessern, insbesondere bei vereinfachtem Aufbau einen Dreipunktgurt an dem mittleren Sitzsegment anzubringen.

### Lösung

Diese Aufgabe wird erfindungsgemäß durch einen Fahrzeugsitz mit den Merkmalen des Anspruches 1 gelöst. Gegenstand der Unteransprüche sind vorteilhafte Ausgestaltungen, welche gemäß den darin angegebenen Kombinationen eingesetzt werden können.

Ein gattungsgemäßer Fahrzeugsitz weist ein Sitzsegment auf, welches einen ersten Sitzplatz mit einer um eine Schwenkachse schwenkbaren ersten Rückenlehne und einen zweiten Sitzplatz mit einer um die Schwenkachse schwenkbaren zweiten Rückenlehne umfasst.

Erfindungsgemäß weist der Fahrzeugsitz Kopplungsmittel zur Kopplung der ersten Rückenlehne mit der zweiten Rückenlehne auf, wobei bei miteinander gekoppelten Rückenlehnen die zweite Rückenlehne zusammen mit der ersten Rückenlehne schwenkbar ist, und wobei bei entkoppelten Rückenlehnen die zweite Rückenlehne unabhängig von der ersten Rückenlehne schwenkbar ist, und ein dem zweiten Sitzplatz zugeordneter Gurtaustrittspunkt für ein Gurtband ist in Vertikalrichtung annähernd in direkter Linie, also ohne seitlichen Versatz, über einem Längsholm und einem Beschlag der ersten Rückenlehne des ersten Sitzplatzes angeordnet. Unter der besagten Zuordnung ist zu verstehen, dass das Gurtband und der Gurtaustrittspunkt zur Benutzung durch einen Insassen des zweiten Sitzplatzes vorgesehen sind.

Dadurch wird ein im Crashfall auftretendes Moment über den Gurtaustrittspunkt in die erste Rückenlehne des ersten Sitzplatzes eingeleitet und über den Längsholm und den Beschlag der ersten Rückenlehne des ersten Sitzplatzes unmittelbar abgeleitet.

Dabei wird kein nennenswertes Moment auf die Rückenlehne des zweiten Sitzplatzes übertragen. Ferner wird das auftretende Moment annähernd vollständig über den besagten Längsholm und den besagten Beschlag abgeleitet. Weitere Komponenten der ersten Rückenlehne des ersten Sitzplatzes, insbesondere ein Lehnenblech, werden nur unwesentlich belastet.

Die erste Rückenlehne ist mittels des Beschlags mit einem Querrohr verbunden, welches sich zumindest annähernd über die komplette Breite des Sitzsegments erstreckt. Ein im Crashfall auftretendes Moment wird dann von dem Beschlag in das Querrohr übertragen und von diesem abgeleitet, beispielsweise unmittelbar in die Fahrzeugstruktur oder in einen Längseinsteller.

Vorzugsweise verläuft das Querrohr parallel zu der Schwenkachse und ist unterhalb der Schwenkachse angeordnet. Ein im Crashfall auftretendes Moment wird dann von dem Beschlag zunächst in Vertikalrichtung nach unten in das Querrohr übertragen und von diesem seitlich abgeleitet.

Erfindungsgemäß ist ein Gurtumlenkbügel nahe einem der Schwenkachse abgewandten oberen Ende der ersten Rückenlehne angeordnet und definiert den Gurtaustrittspunkt für das Gurtband des zweiten Sitzplatzes. Alternativ dazu ist erfindungsgemäß vorgesehen, dass ein dem zweiten Sitzplatz zugeordneter Gurtautomat nahe einem der Schwenkachse abgewandten oberen Ende der ersten Rückenlehne angeordnet ist und den Gurtaustrittspunkt definiert.

Gemäß einer vorteilhaften Ausgestaltung der Erfindung ist der dem zweiten Sitzplatz zugeordnete Gurtautomat an der ersten Rückenlehne befestigt.

Zur Erleichterung der Montage sowie zur Erhöhung der Festigkeit weist die erste Rückenlehne ein Aufnahmeblech auf, mit welchem der dem zweiten Sitzplatz zugeordnete Gurtautomat verbunden, vorzugsweise verschraubt ist. Vorzugsweise ist der Gurtautomat dabei formschlüssig von dem Aufnahmeblech aufgenommen. Vorzugsweise ist das Aufnahmeblech nahe der Schwenkachse angeordnet und mit dem Längsholm sowie mit einem unteren Querholm der ersten Rückenlehne verbunden. Insbesondere ist das Aufnahmeblech vorzugsweise mit dem Längsholm und/oder mit dem unteren Querholm verschweißt.
Gemäß einer vorteilhaften Ausgestaltung der Erfindung ist der dem zweiten Sitzplatz zugeordnete Gurtautomat nahe der Schwenkachse angeordnet.

Die Kopplungsmittel umfassen einen an einer der beiden Rückenlehnen angeordneten Bolzen und eine an der anderen Rückenlehne angeordnete Verriegelungsvorrichtung, welche mit dem Bolzen zusammenwirkt. Die Verriegelungsvorrichtung ist dabei vorteilhaft nahe dem der Schwenkachse abgewandten oberen Ende der Rückenlehne, insbesondere an der zweiten Rückenlehne angeordnet. Der Bolzen ist in diesem Fall an der ersten Rückenlehne angeordnet.
Das Sitzsegment umfasst ein Sitzteil, relativ zu welchem die erste Rückenlehne sowie die zweite Rückenlehne schwenkbar sind.
Der Fahrzeugsitz weist auch ein zweites Sitzsegment auf, welches ein zweites Sitzteil und eine relativ zu diesem schwenkbare dritte Rückenlehne umfasst.

### Figuren und Ausführungsformen der Erfindung

Im Folgenden ist die Erfindung anhand von einem in den Figuren dargestellten vorteilhaften Ausführungsbeispiel näher erläutert. Die Erfindung ist jedoch nicht auf dieses Ausführungsbeispiel beschränkt. Es zeigen:

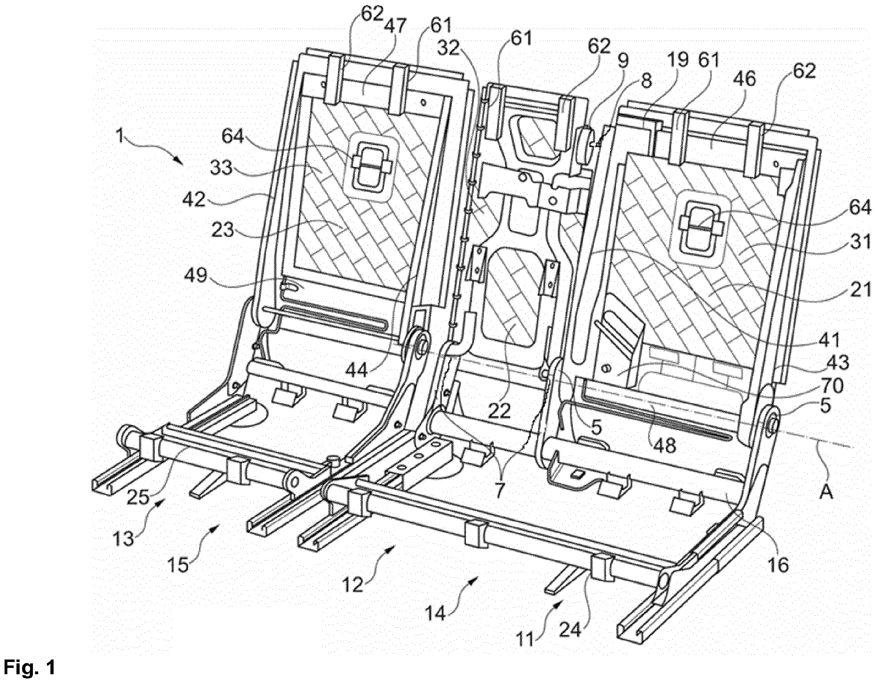

- Fig. 1:: eine perspektivische Darstellung eines Fahrzeugsitzes ohne Polsterung,
- Fig. 2:: eine Explosionsdarstellung eines Lehnenrohlings,
- Fig. 3:: eine Explosionsdarstellung einer Rückenlehne,

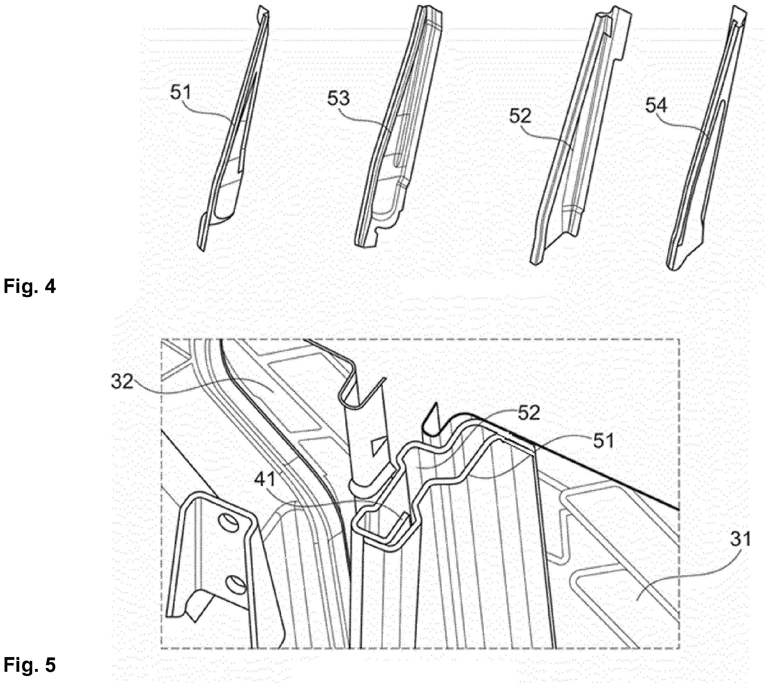

- Fig. 4:: Baukastenkomponenten der Längsholme und
- Fig. 5:: einen horizontalen Schnitt durch eine Rückenlehne.

Ein Fahrzeugsitz 1 ist als Rücksitzanlage eines Kraftfahrzeuges ausgebildet. Der Fahrzeugsitz 1 umfasst ein erstes Sitzsegment 14 mit einem ersten Sitzteil 24 und ein zweites Sitzsegment 15 mit einem zweiten Sitzteil 25, welche unabhängig voneinander mittels Längseinsteller längseinstellbar mit der Fahrzeugstruktur des Kraftfahrzeuges verbunden sind.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet. Die Vertikalrichtung schließt vorliegend auch Winkel bis zu 30° zu der Senkrechten ein und umfasst insbesondere die Orientierung einer im Fahrzeug montierten Rückenlehne des Fahrzeugsitzes 1 in einer aufrechten Gebrauchsstellung.

Das erste Sitzsegment 14 nimmt ungefähr 60 % der gesamten Breite des Fahrzeugsitzes 1 ein, während das zweite Sitzsegment 15 ungefähr 40 % der besagten Breite einnimmt. Eine erste Rückenlehne 21 sowie eine zweite Rückenlehne 22 sind an dem ersten Sitzteil 24 um eine Schwenkachse A schwenkbar angebracht, während eine dritte Rückenlehne 23 an dem zweiten Sitzteil 25 schwenkbar angebracht ist. Die zweite Rückenlehne 22 ist in Querrichtung zwischen der ersten Rückenlehne 21 und der dritten Rückenlehne 23 angeordnet. Die Schwenkachse A verläuft horizontal in Querrichtung.

Die erste Rückenlehne 21 bildet mit einem Teil des ersten Sitzteils 24 einen ersten Sitzplatz 11. Die zweite Rückenlehne 22 bildet mit einem Teil des ersten Sitzteils 24 einen zweiten Sitzplatz 12. Die dritte Rückenlehne 23 bildet mit dem zweiten Sitzteil 25 einen dritten Sitzplatz 13. Der erste Sitzplatz 11 und der zweite Sitzplatz 12 sind dem ersten Sitzsegment 14 zugeordnet, der dritte Sitzplatz 13 ist dem zweiten Sitzsegment 15 zugeordnet.

Die erste Rückenlehne 21 umfasst ein erstes Lehnenblech 31, welches mittels eines ersten rechten Längsholms 41, eines ersten linken Längsholms 43, eines ersten oberen Querholms 46 und eines ersten unteren Querholms 48 verstärkt ist. Die zweite Rückenlehne 22 umfasst ein zweites Lehnenblech 32. Die dritte Rückenlehne 23 umfasst ein drittes Lehnenblech 33, welches mittels eines zweiten rechten Längsholms 42, eines zweiten linken Längsholms 44, eines zweiten oberen Querholms 47 und eines zweiten unteren Querholms 49 verstärkt ist. Der erste rechte Längsholm 41 der ersten Rückenlehne 21 und der zweite linke Längsholm 44 der dritten Rückenlehne 23 sind jeweils der zweiten Rückenlehne 22 zugewandt.

Der zweite rechte Längsholm 42 ist aus einem rechten Rahmenteil 52 gebildet. Der zweite linke Längsholm 44 ist aus einem linken Rahmenteil 54 gebildet. Das rechte Rahmenteil 52 und das linke Rahmenteil 54 sind dabei spiegelsymmetrisch ausgeführt.

Der erste rechte Längsholm 41 ist aus einem rechten Rahmenteil 52 und einem rechten Verstärkungsteil 51 gebildet. Der erste linke Längsholm 43 ist aus einem linken Rahmenteil 54 und einem linken Verstärkungsteil 53 gebildet. Das rechte Verstärkungsteil 51 und das linke Verstärkungsteil 53 sind dabei spiegelsymmetrisch ausgeführt.

Es sind somit zwei identische rechte Rahmenteile 52 und zwei identische linke Rahmenteile 54 in dem Fahrzeugsitz 1 vorhanden, nämlich jeweils in der ersten Rückenlehne 21 sowie in der dritten Rückenlehne 23.

Fertigungstechnisch sind die spiegelsymmetrischen rechten Rahmenteile 52 und linken Rahmenteile 54 mit dem selben Presswerkzeug herstellbar. Ebenso sind die spiegelsymmetrischen rechten Verstärkungsteile 51 und linken Verstärkungsteile 53 mit dem selben Presswerkzeug herstellbar. Zur Herstellung der vier Längsholme 41, 42, 43, 44 sind somit nur zwei Presswerkzeuge erforderlich.

Der erste obere Querholms 46, der zweite obere Querholm 47 und der zweite untere Querholms 49 sind je als identisches Profilteil 56 ausgebildet. Es sind somit drei identische Profilteile 56 in dem Fahrzeugsitz 1 vorhanden, nämlich eines in der ersten Rückenlehne 21 sowie zwei in der dritten Rückenlehne 23.

Der erste untere Querholm 48 ist vorliegend als Vierkantrohr ausgeführt und unterscheidet sich somit von dem Profilteil 56.

Jede der Rückenlehnen 21, 22, 23 umfasst weiterhin je eine erste Kopfstützenaufnahme 61, eine zweite Kopfstützenaufnahme 62 und einen Top-Tether-Bügel 64, welche ebenfalls jeweils identisch ausgeführt sind.

Ferner sind das erste Lehnenblech 31 der ersten Rückenlehne 21 und das dritte Lehnenblech 33 der dritten Rückenlehne 23 identisch ausgeführt.

Die Sitzteile 24, 25 und die Rückenlehnen 21, 22, 23 sind in an sich bekannter Weise mit Polstern versehen. Die erste Rückenlehne 21 und die dritte Rückenlehne 23 nehmen jeweils ungefähr 40 % der gesamten Breite des Fahrzeugsitzes 1 ein, während die zweite Rückenlehne 22 ungefähr 20 % der besagten Breite einnimmt.

Das erste Sitzteil 24 umfasst ein in Querrichtung, parallel zu der Schwenkachse A verlaufendes Querrohr 16, welches sich annähernd über die komplette Breite des ersten Sitzteils 24 und damit auch annähernd über die komplette Breite des ersten Sitztsegments 14 erstreckt.

Die erste Rückenlehne 21 ist mittels zweier Beschläge 5 mit dem Querrohr 16 des ersten Sitzteils 24 verbunden. Die Beschläge 5 sind vorliegend bauartgleich. Jeder Beschlag 5 weist ein mit dem ersten Sitzteil 24 fest verbundenes, das heißt sitzteilfestes, erstes Beschlagteil und ein mit der ersten Rückenlehne 21 fest verbundenes, das heißt lehnenfestes, zweites Beschlagteil auf, welche relativ zueinander verschwenkbar sind. Die beiden Beschlagteile können in baulicher Hinsicht eine scheibenförmige Einheit bilden und beispielsweise durch einen Umklammerungsring zusammengehalten werden.

Vorliegend sind die Beschläge 5 jeweils als Rastbeschlag ausgebildet, das heißt die beiden Beschlagteile sind mittels beweglicher Riegel miteinander verriegelbar. Die Riegel werden beispielsweise durch einen federbelasteten Exzenter in eine verriegelnde Stellung bewegt. Die erste Rückenlehne 21 ist mittels der Beschläge 5 einerseits in ihrer Neigung relativ zu dem ersten Sitzteil 24 in verschiedene Gebrauchsstellungen einstellbar und andererseits nach vorne in eine Nichtgebrauchsstellung schwenkbar.

Die zweite Rückenlehne 22 ist mittels zweier Drehlager 7 mit dem Querrohr 16 des ersten Sitzteils 24 verbunden. Nahe dem der Schwenkachse A abgewandten oberen Ende der zweiten Rückenlehne 22 ist eine Verriegelungsvorrichtung 9 angeordnet, welche mit einem an der ersten Rückenlehne 21 vorgesehenen Bolzen 8 zusammenwirkt.

Bei mit dem Bolzen 8 verriegelter Verriegelungsvorrichtung 9 ist die zweite Rückenlehne 22 zusammen mit der ersten Rückenlehne 21 relativ zu dem ersten Sitzteil 24 schwenkbar. Bei entriegelter Verriegelungsvorrichtung 9 ist die zweite Rückenlehne 22 unabhängig von der ersten Rückenlehne 21 relativ zu dem ersten Sitzteil 24 nach vorne in die Nichtgebrauchsstellung schwenkbar.

Jeder der drei Sitzplätze verfügt über einen Dreipunktgurt, wobei jeder Dreipunktgurt einen hier nicht dargestellten Gurtautomaten umfasst. Die Gurtautomaten des ersten Sitzplatzes 11 und des dritten Sitzplatzes 13 sind jeweils an der Fahrzeugstruktur befestigt.

Der Gurtautomat des zweiten Sitzplatzes 12 ist an der ersten Rückenlehne 21 des ersten Sitzplatzes 11 befestigt. Damit befindet sich der Gurtautomat des zweiten Sitzplatzes 12 ebenfalls in dem ersten Sitzsegment 14.

Vorliegend ist der Gurtautomat des zweiten Sitzplatzes 12 nahe der Schwenkachse A und unmittelbar neben dem ersten rechten Längsholm 41 der ersten Rückenlehne 21 angeordnet. Von dort verläuft ein hier nicht dargestelltes Gurtband annähernd parallel zu dem ersten rechten Längsholm 41 und parallel zu dem ersten Lehnenblech 31 zu einem Gurtumlenkbügel 19, welcher nahe dem der Schwenkachse A abgewandten oberen Ende der ersten Rückenlehne 21 und damit auch nahe dem Bolzen 8 angeordnet ist.

Die erste Rückenlehne 21 weist dazu ein Aufnahmeblech 70 auf, welches den nicht dargestellten Gurtautomat des zweiten Sitzplatzes 12 aufnimmt. Das Aufnahmeblech 70 ist neben dem ersten rechten Längsholm 41 und oberhalb der Schwenkachse A angeordnet. Das Aufnahmeblech 70 ist weitgehend flach ausgebildet und weist an der dem ersten rechten Längsholm 41 abgewandten Seite eine Umbiegung auf.

Das Aufnahmeblech 70 liegt auf dem ersten Lehnenblech 31 auf. Vorliegend ist das Aufnahmeblech 70 mit dem ersten rechten Längsholm 41 und mit dem ersten unteren Querholm 48 verbunden, vorliegend verschweißt.

Der nicht dargestellte Gurtautomat des zweiten Sitzplatzes 12 liegt vorliegend an dem Aufnahmeblech 70 an und ist mit diesem verbunden, vorliegend verschraubt. Dazu weist das Aufnahmeblech 70 vorliegend einen abstehenden Schweißbolzen mit Außengewinde auf, welcher eine Befestigungsplatte des Gurtautomaten durchdringt, und auf welchen dann eine Mutter mit Innengewinde aufgeschraubt ist.

Der Gurtumlenkbügel 19 definiert dabei einen Gurtaustrittspunkt für das Gurtband des zweiten Sitzplatzes 12. Alternativ dazu ist erfindungsgemäß auch vorgesehen, dass der Gurtautomat nahe dem der Schwenkachse A abgewandten oberen Ende der ersten Rückenlehne 21 und nahe dem Bolzen 8 angeordnet ist. In diesem Fall kann der Gurtumlenkbügel 19 entfallen, wenn der Gurtautomat selbst den Gurtaustrittspunkt für das Gurtband des zweiten Sitzplatzes 12 definiert.

Der Gurtumlenkbügel 19 befindet sich in Querrichtung unmittelbar neben dem ersten rechten Längsholm 41, welcher sich unmittelbar neben dem zugehörigen Beschlag 5 befindet. Der zugehörige Beschlag 5, der rechte Längsholm 41 und der Gurtumlenkbügel 19 liegen also in Vertikalrichtung annähernd übereinander und in Querrichtung nur geringfügig zueinander versetzt.

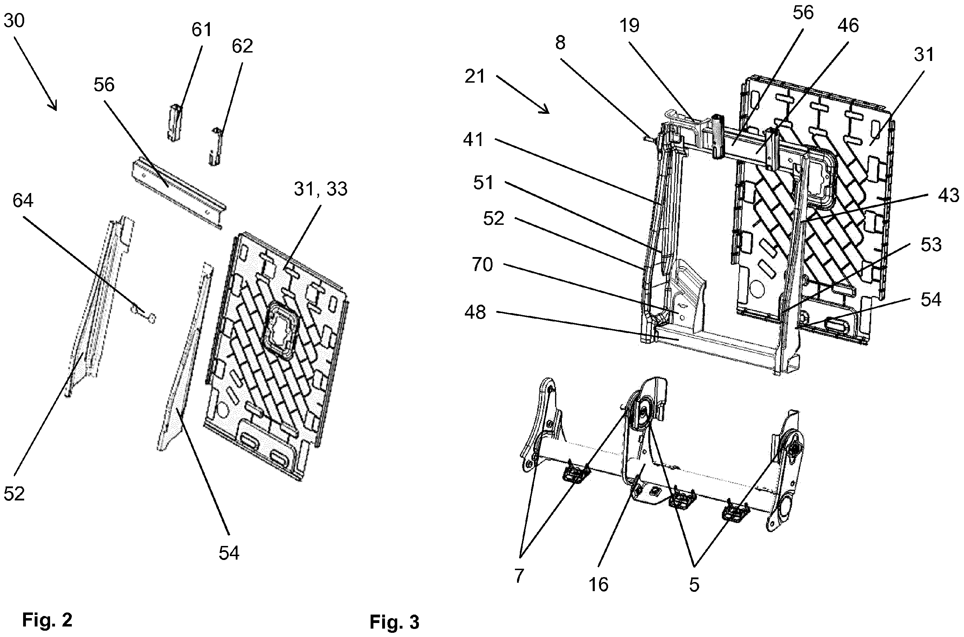

Befindet sich ein Insasse auf dem zweiten Sitzplatz 12 und benutzt den zugehörigen Gurt, so zieht das Gurtband im Crashfall an dem Gurtumlenkbügel 19 in Fahrtrichtung nach vorne und bewirkt dadurch ein Moment auf die erste Rückenlehne 21 um die Schwenkachse A. Dieses Moment wird von dem ersten rechten Längsholm 41 zu dem Beschlag 5 übertragen und in diesen eingeleitet. Der Beschlag überträgt das Moment in das Querrohr 16, und von dort wird das Moment, vorliegend über den Längseinsteller, in die Fahrzeugstruktur eingeleitet. Die erste Rückenlehne 21 und die dritte Rückenlehne 23 sind weitgehend gleichartig aufgebaut und umfassen je ein Lehnenblech 31 bzw. 33, ein rechtes Rahmenteil 52, ein linkes Rahmenteile 54, ein Profilteil 56 als oberen Querholm 46 bzw. 47 sowie eine erste Kopfstützenaufnahme 61, eine zweite Kopfstützenaufnahme 62 und einen Top-Tether-Bügel 64. Ein solcher Lehnenrohling 30 ist in Fig. 2 dargestellt.

Die dritte Rückenlehne 23 erhält zusätzlich ein weiteres Profilteil 56 als zweiten unteren Querholm 49. Die erste Rückenlehne 21 erhält zusätzlich das Vierkantrohr als ersten unteren Querholm 48, die Verstärkungsteile 51, 53, den Gurtautomat, den Gurtumlenkbügel 19, das Aufnahmeblech 70 sowie den Bolzen 8.

### Bezugszeichenliste

- 1: Fahrzeugsitz
- 5: Beschlag
- 7: Drehlager
- 8: Bolzen
- 9: Verriegelungsvorrichtung
- 11: erster Sitzplatz
- 12: zweiter Sitzplatz
- 13: dritter Sitzplatz
- 14: erstes Sitzsegment
- 15: zweites Sitzsegment
- 16: Querrohr
- 19: Gurtumlenkbügel
- 21: erste Rückenlehne
- 22: zweite Rückenlehne
- 23: dritte Rückenlehne
- 24: erstes Sitzteil
- 25: zweites Sitzteil
- 30: Lehnenrohling
- 31: erstes Lehnenblech
- 32: zweites Lehnenblech
- 33: drittes Lehnenblech
- 41: erster rechter Längsholm
- 42: zweiter rechter Längsholm
- 43: erster linker Längsholm
- 44: zweiter linker Längsholm
- 46: erster oberer Querholm
- 47: zweiter oberer Querholm
- 48: erster unterer Querholm
- 49: zweiter unterer Querholm
- 51: rechtes Verstärkungsteil
- 52: rechtes Rahmenteil
- 53: linkes Verstärkungsteil
- 54: linkes Rahmenteil
- 56: Profilteil
- 61: erste Kopfstützenaufnahme
- 62: zweite Kopfstützenaufnahme
- 64: Top-Tether-Bügel
- 70: Aufnahmeblech
- A: Schwenkachse

## Patentansprüche

1. Fahrzeugsitz (1) mit einem Sitzsegment (14), welches einen ersten Sitzplatz (11) mit einer um eine Schwenkachse (A) schwenkbaren ersten Rückenlehne (21) und einen zweiten Sitzplatz (12) mit einer um die Schwenkachse (A) schwenkbaren zweiten Rückenlehne (22) umfasst, wobei der Fahrzeugsitz (1) Kopplungsmittel (8, 9) zur Kopplung der ersten Rückenlehne (21) mit der zweiten Rückenlehne (22) aufweist, wobei bei miteinander gekoppelten Rückenlehnen (21, 22) die zweite Rückenlehne (22) zusammen mit der ersten Rückenlehne (21) schwenkbar ist, und bei entkoppelten Rückenlehnen (21, 22) die zweite Rückenlehne (22) unabhängig von der ersten Rückenlehne (21) schwenkbar ist, wobei die Kopplungsmittel (8, 9) einen an einer der Rückenlehnen (21, 22) angeordneten Bolzen (8) und eine an der anderen Rückenlehne (21, 22) angeordnete Verriegelungsvorrichtung (9), welche mit dem Bolzen (8) zusammenwirkt, umfassen, wobei ein dem zweiten Sitzplatz (12) zugeordneter Gurtaustrittspunkt für ein Gurtband in Vertikalrichtung annähernd in direkter Linie über einem Längsholm (41) der ersten Rückenlehne (21) des ersten Sitzplatzes (11) angeordnet ist, wobei ein Gurtumlenkbügel (19) nahe einem der Schwenkachse (A) abgewandten oberen Ende der ersten Rückenlehne (21) angeordnet ist und den Gurtaustrittspunkt definiert, oder ein nahe einem der Schwenkachse (A) abgewandten oberen Ende der ersten Rückenlehne (21) und nahe dem Bolzen (8) angeordneter Gurtautomat den Gurtaustrittspunkt definiert, **dadurch gekennzeichnet, dass** der Gurtaustrittspunkt in Vertikalrichtung annähernd in direkter Linie über einem Beschlag (5) der ersten Rückenlehne (21) des ersten Sitzplatzes (11) angeordnet ist und die erste Rückenlehne (21) mittels des Beschlags (5) mit einem Querrohr (16) verbunden ist, welches sich zumindest annähernd über die komplette Breite des Sitzsegments (14) erstreckt.

2. Fahrzeugsitz (1) nach Anspruch 1, **dadurch gekennzeichnet, dass** das Querrohr (16) parallel zu der Schwenkachse (A) verläuft und unterhalb der Schwenkachse (A) angeordnet ist.

3. Fahrzeugsitz (1) nach einem der vorstehenden Ansprüche, **dadurch gekennzeichnet, dass** der dem zweiten Sitzplatz (12) zugeordnete Gurtautomat an der ersten Rückenlehne (21) befestigt ist.

4. Fahrzeugsitz (1) nach Anspruch 3, **dadurch gekennzeichnet, dass** die erste Rückenlehne (21) ein Aufnahmeblech (70) aufweist, mit welchem der dem zweiten Sitzplatz (12) zugeordnete Gurtautomat verbunden, vorzugsweise verschraubt, ist.

5. Fahrzeugsitz (1) nach Anspruch 4, **dadurch gekennzeichnet, dass** der Gurtautomat formschlüssig von dem Aufnahmeblech (70) aufgenommen ist.

6. Fahrzeugsitz (1) nach Anspruch 5, **dadurch gekennzeichnet, dass** das Aufnahmeblech (70) nahe der Schwenkachse (A) angeordnet ist.

7. Fahrzeugsitz (1) nach Anspruch 6, **dadurch gekennzeichnet, dass** das Aufnahmeblech (70) mit dem Längsholm (41) und/oder mit einem unteren Querholm (48) der ersten Rückenlehne (21) verbunden, vorzugsweise verschweißt, ist.

8. Fahrzeugsitz (1) nach einem der Ansprüche 3 bis 7, **dadurch gekennzeichnet, dass** der dem zweiten Sitzplatz (12) zugeordnete Gurtautomat nahe der Schwenkachse (A) angeordnet ist.

9. Fahrzeugsitz (1) nach einem der vorstehenden Ansprüche, **dadurch gekennzeichnet, dass** die Verriegelungsvorrichtung (9) nahe dem der Schwenkachse (A) abgewandten oberen Ende der zweiten Rückenlehne (22) angeordnet ist.

10. Fahrzeugsitz (1) nach einem der vorstehenden Ansprüche, **dadurch gekennzeichnet, dass** das Sitzsegment (14) ein Sitzteil (24) umfasst, relativ zu welchem die erste Rückenlehne (21) sowie die zweite Rückenlehne (22) schwenkbar sind.

11. Fahrzeugsitz (1) nach einem der vorstehenden Ansprüche, **dadurch gekennzeichnet, dass** der Fahrzeugsitz (1) ein zweites Sitzsegment (15) aufweist, welches ein zweites Sitzteil (25) und eine relativ zu diesem schwenkbare dritte Rückenlehne (23) umfasst.

## Claims

1. Vehicle seat (1) having a seat segment (14) which comprises a first seating position (11), with a first backrest (21) which is pivotable about a pivot axis (A), and a second seating position (12), with a second backrest (22) which is pivotable about the pivot axis (A), wherein the vehicle seat (1) has coupling means (8, 9) for the coupling of the first backrest (21) to the second backrest (22), wherein, when the backrests (21, 22) are coupled to one another, the second backrest (22) is pivotable together with the first backrest (21), and, when the backrests (21, 22) are decoupled, the second backrest (22) is pivotable independently of the first backrest (21), wherein the coupling means (8, 9) comprise a pin (8), which is arranged on one of the backrests (21, 22), and a locking device (9), which is arranged on the other backrest (21, 22) and which interacts with the pin (8), wherein a seatbelt outlet point, assigned to the second seating position (12), for a seatbelt web is arranged, as viewed in a vertical direction, approximately in a direct line above a longitudinal member (41) of the first backrest (21) of the first seating position (11), wherein a seatbelt diverting hoop (19) is arranged close to an upper end, remote from the pivot axis (A), of the first backrest (21) and defines the seatbelt outlet point, or a seatbelt mechanism arranged close to an upper end, remote from the pivot axis (A), of the first backrest (21) and close to the pin (8) defines the seatbelt outlet point, **characterized in that** the seatbelt outlet point is arranged, as viewed in a vertical direction, approximately in a direct line above a fitting (5) of the first backrest (21) of the first seating position (11) and the first backrest (21) is connected by means 384879
2. of the fitting (5) to a transverse tube (16) which extends at least approximately over the entire width of the seat segment (14).

2. Vehicle seat (1) as claimed in Claim 1, **characterized in that** the transverse tube (16) runs parallel to the pivot axis (A) and is arranged below the pivot axis (A).

3. Vehicle seat (1) as claimed in either of the preceding claims, **characterized in that** the seatbelt mechanism assigned to the second seating position (12) is fastened to the first backrest (21) .

4. Vehicle seat (1) as claimed in Claim 3, **characterized in that** the first backrest (21) has a mounting panel (70) to which the seatbelt mechanism assigned to the second seating position (12) is connected, preferably screwed.

5. Vehicle seat (1) as claimed in Claim 4, **characterized in that** the seatbelt mechanism is accommodated in positively locking fashion by the mounting panel (70).

6. Vehicle seat (1) as claimed in Claim 5, **characterized in that** the mounting panel (70) is arranged close to the pivot axis (A).

7. Vehicle seat (1) as claimed in Claim 6, **characterized in that** the mounting panel (70) is connected, preferably welded, to the longitudinal member (41) and/or to a lower transverse member (48) of the first backrest (21).

8. Vehicle seat (1) as claimed in one of Claims 3 to 7, **characterized in that** the seatbelt mechanism assigned to the second seating position (12) is arranged close to the pivot axis (A).

9. Vehicle seat (1) as claimed in one of the preceding claims, **characterized in that** the locking device (9) is arranged close to the upper end, remote from the pivot axis (A), of the second backrest (22).

10. Vehicle seat (1) as claimed in one of the preceding claims, **characterized in that** the seat segment (14) comprises a seat part (24) relative to which the first backrest (21) and the second backrest (22) are pivotable.

11. Vehicle seat (1) as claimed in one of the preceding claims, **characterized in that** the vehicle seat (1) has a second seat segment (15) which comprises a second seat part (25) and a third backrest (23) which is pivotable relative to said second seat part.

## Revendications

1. Siège de véhicule (1) comprenant un segment de siège (14) qui comprend une première place de siège (11) avec un premier dossier (21) pouvant pivoter autour d'un axe de pivotement (A) et une deuxième place de siège (12) avec un deuxième dossier (22) pouvant pivoter autour de l'axe de pivotement (A), le siège de véhicule (1) présentant des moyens d'accouplement (8, 9) pour l'accouplement du premier dossier (21) au deuxième dossier (22), le deuxième dossier (22), lorsque les dossiers (21, 22) sont accouplés l'un à l'autre, pouvant pivoter conjointement avec le premier dossier (21), et lorsque les dossiers (21, 22) sont désaccouplés, le deuxième dossier (22) pouvant pivoter indépendamment du premier dossier (21), les moyens d'accouplement (8, 9) comprenant un boulon (8) disposé au niveau de l'un des dossiers (21, 22) et un dispositif de verrouillage (9) disposé au niveau de l'autre dossier (21, 22), qui coopère avec le boulon (8), un point de sortie de ceinture pour une ceinture, associé à la deuxième place de siège (12), étant disposé dans la direction verticale approximativement en ligne directe au-dessus d'un longeron (41) du premier dossier (21) de la première place de siège (11), un étrier de renvoi de ceinture (19) étant disposé à proximité d'une extrémité supérieure du premier dossier (21) éloignée de l'axe de pivotement (A) et définissant le point de sortie de ceinture, ou un système automatique de ceinture disposé à proximité d'une extrémité supérieure du premier dossier (21), éloignée de l'axe de pivotement (A), et à proximité du boulon (8) définissant le point de sortie de ceinture,
**caractérisé en ce que** le point de sortie de ceinture est disposé dans la direction verticale approximativement en ligne directe au-dessus d'une ferrure (5) du premier dossier (21) de la première place de siège (11) et le premier dossier (21) est connecté au moyen de la ferrure (5) à un tube transversal (16) qui s'étend au moins approximativement sur toute la largeur du segment de siège (14).

2. Siège de véhicule (1) selon la revendication 1, **caractérisé en ce que** le tube transversal (16) s'étend parallèlement à l'axe de pivotement (A) et est disposé en dessous de l'axe de pivotement (A).

3. Siège de véhicule (1) selon l'une quelconque des revendications précédentes, **caractérisé en ce que** le système automatique de ceinture associé à la deuxième place de siège (12) est fixé au premier dossier (21).

4. Siège de véhicule (1) selon la revendication 3, **caractérisé en ce que** le premier dossier (21) présente une tôle de réception (70) à laquelle est connecté, de préférence est vissé, le système automatique de ceinture associé à la deuxième place de siège (12).

5. Siège de véhicule (1) selon la revendication 4, **caractérisé en ce que** le système automatique de ceinture est reçu par engagement positif par la tôle de réception (70).

6. Siège de véhicule (1) selon la revendication 5, **caractérisé en ce que** la tôle de réception (70) est disposée à proximité de l'axe de pivotement (A) .

7. Siège de véhicule (1) selon la revendication 6, **caractérisé en ce que** la tôle de réception (70) est raccordée, de préférence soudée, au longeron (41) et/ou à une traverse inférieure (48) du premier dossier (21).

8. Siège de véhicule (1) selon l'une quelconque des revendications 3 à 7, **caractérisé en ce que** le système automatique de ceinture associé à la deuxième place de siège (12) est disposé à proximité de l'axe de pivotement (A).

9. Siège de véhicule (1) selon l'une quelconque des revendications précédentes, **caractérisé en ce que** le dispositif de verrouillage (9) est disposé à proximité de l'extrémité supérieure du deuxième dossier (22) éloignée de l'axe de pivotement (A).

10. Siège de véhicule (1) selon l'une quelconque des revendications précédentes, **caractérisé en ce que** le segment de siège (14) comprend une partie de siège (24) par rapport à laquelle le premier dossier (21) et le deuxième dossier (22) peuvent pivoter.

11. Siège de véhicule (1) selon l'une quelconque des revendications précédentes, **caractérisé en ce que** le siège de véhicule (1) présente un deuxième segment de siège (15) qui comprend une deuxième partie de siège (25) et un troisième dossier (23) pouvant pivoter par rapport à celle-ci.
